# EUROPÄISCHE PATENTSCHRIFT

(11) **EP 2 608 332 B1**
(45) Veröffentlichungstag und Bekanntmachung des Hinweises auf die Patenterteilung: **01.07.2015**
(21) Anmeldenummer: 12008676.4
(22) Anmeldetag: 21.12.2012
(51) Int. Cl.: H02G 3/06, H02G 3/10, H02G 3/12, H05K 5/02, G11B 33/12

(54) **Endkappe; Befestigungssystem zur Befestigung eines Profilgehäuses in einem Schranksystem; Verfahren zur Befestigung eines Profilgehäuses in einem Schranksystem**
End cap; fixing system for fixing a profile housing in a cabinet system; method for fastening a profile housing in a cabinet system
Capuchon terminal ; système de fixation destiné à fixer un boîtier profilé dans un système d'armoire ; procédé de fixation d'un boîtier profilé dans un système d'armoire

(30) Priorität: 22.12.2011 DE 102011122377
(43) Veröffentlichungstag der Anmeldung: 26.06.2013
(73) Patentinhaber: Bachmann Technology GmbH & Co. KG, 70565 Stuttgart (DE)
(72) Erfinder: Thaler, Roland, 70567 Stuttgart (DE); Gell, Oliver, 71404 Korb (DE)
(74) Vertreter: Schuster, Müller & Partner

(56) Entgegenhaltungen:
- DE-U1- 9 104 301
- DE-U1-202009 009 498
- FR-A1- 2 737 055

## Beschreibung

### Stand der Technik

Die Erfindung geht aus von einer Endkappe, nach der Gattung des Anspruchs 1, einem Befestigungssystem zur Befestigung eines Profilgehäuses in einem Schranksystem, nach der Gattung des Anspruchs 12, und einem Verfahren zur Befestigung eines Profilgehäuses in einem Schranksystem, nach der Gattung des Anspruchs 14.

Aus der Gebrauchsmusterschrift DE 20 2009 009 498 U1 ist eine Klammer bekannt, die für Kabelkanäle zur Schnittkaschierung von Schnittkanten aufeinander stoßender Kabelkanalabschnitte und/oder deren Enden verwendbar ist. Zur Befestigung eines Profilgehäuses in einem Schranksystem ist diese Klammer aber nicht geeignet. Dies gilt auch für die in der Gebrauchsmusterschrift DE 91 04 301 U1 und der Offenlegungsschrift FR 2 737 055 A1 offenbarten Endkappen.

Bei den bestehenden zum Stand der Technik gehörenden Befestigungen von Profilgehäusen in Schranksystemen werden häufig Montagewinkel eingesetzt, die zur Verbindung mit dem Profilgehäuse mittels eines Werkzeuges mit diesem verschraubt werden. Dieser Arbeitsschritt ist zeitaufwändig. Nachteilig ist zudem, dass beim Fehlen des passenden Werkzeuges eine zufrieden stellende Verbindung nicht möglich ist.

Um diese Nachteile zu überwinden wird in der Patentschrift US 5,587,889 A eine Verbindung vorgeschlagen, bei der ein Gehäuse an einer Halterung mittels einer Klemme fixiert wird. Zwar handelt es sich dabei um eine schraubenlose Verbindung, doch ist nachteilig zu bewerten, dass diese schraubenlose Verbindung passgenau aufeinander abgestimmt sein muss, so dass dieses Befestigungssystem nicht universal einsetzbar ist.

Es ist daher Aufgabe der Erfindung die Nachteile des Standes der Technik zu überwinden und mit einfachen Mitteln eine Befestigung eines Profilgehäuses in einem Schranksystem zu ermöglichen.

### Die Erfindung und ihre Vorteile

Die erfindungsgemäße Endkappe, mit dem kennzeichnenden Merkmale des Anspruchs 1, das erfindungsgemäße Befestigungssystem zur Befestigung eines Profilgehäuses in einem Schranksystem, mit den kennzeichnenden Merkmalen des Anspruchs 12, und das erfindungsgemäße Verfahren zur Befestigung eines Profilgehäuses in einem Schranksystem, mit den kennzeichnenden Merkmalen des Anspruchs 14, haben demgegenüber den Vorteil, dass die Endkappe mindestens eine Führung aufweist, so dass mindestens ein Befestigungsmittel werkzeuglos an der Endkappe angeordnet werden kann, wobei das Befestigungsmittel an seiner dem Schranksystem zugewandten Seite Befestigungsmöglichkeiten vorsieht, die einen Einbau in alle herkömmlichen Schranksysteme ermöglichen.

Nach einer vorteilhaften Ausgestaltung der erfindungsgemäßen Endkappe erfolgt die Anordnung des Befestigungsmittels an der Endkappe direkt durch Einschieben des Befestigungsmittels in die Führung der Endkappe oder indirekt mittels mindestens einen in die Führung der Endkappe einschiebbaren Adapters.

Nach einer diesbezüglichen vorteilhaften Ausgestaltung der erfindungsgemäßen Endkappe weist die Endkappe und/oder das Befestigungsmittel mindestens einen Rasthaken auf, wodurch ein in die Führung eingeschobenes Befestigungsmittel mit der Endkappe verrastet oder weist die Endkappe und/oder der Adapter mindestens einen Rasthaken auf, wodurch ein in die Führung eingeschobener Adapter mit der Endkappe verrastet.

Nach einer zusätzlichen vorteilhaften Ausgestaltung der erfindungsgemäßen Endkappe weist das Befestigungsmittel und/oder der Adapter mindestens einen Winkel auf. Im Falle des Befestigungsmittels handelt es sich somit um einen Befestigungswinkel (z.B. Montagewinkel). Im Falle des Adapters handelt es sich somit um einen Winkeladapter.

Nach einer zusätzlichen vorteilhaften Ausgestaltung der erfindungsgemäßen Endkappe weist ein außerhalb der Führung angeordneter Teil eines in die Führung eingeschobenen Befestigungsmittels oder ein außerhalb der Führung angeordneter Teil eines in die Führung eingeschobenen Adapters mindestens eine Öffnung auf.

Nach einer diesbezüglichen vorteilhaften Ausgestaltung der erfindungsgemäßen Endkappe ist die Öffnung ein Rechteckloch, Rundloch oder Langloch.

Nach einer zusätzlichen vorteilhaften Ausgestaltung der erfindungsgemäßen Endkappe sind eine außerhalb der Führung angeordnete Fläche eines in die Führung eingeschobenen Befestigungsmittels oder eine außerhalb der Führung angeordnete Fläche eines in die Führung eingeschobenen Adapters parallel zu einer Wandung des Profilgehäuses angeordnet.

Nach einer diesbezüglichen vorteilhaften Ausgestaltung der erfindungsgemäßen Endkappe ist die parallel zur Wandung des Profilgehäuses angeordnete Fläche beabstandet zu der Wandung des Profilgehäuses angeordnet.

Nach einer zusätzlichen vorteilhaften Ausgestaltung der erfindungsgemäßen Endkappe weist die Endkappe ein Loch zur Kabeleinspeisung (z.B. für ein Netzkabel, Datenkabel, Multimediakabel odgl.) oder eine Aussparung für einen Stecker auf.

Nach einer zusätzlichen vorteilhaften Ausgestaltung der erfindungsgemäßen Endkappe ist die Endkappe durch eine Verrastung mit dem Profilgehäuse verbunden.

Nach einer zusätzlichen vorteilhaften Ausgestaltung der erfindungsgemäßen Endkappe sind die Endkappe, das Befestigungsmittel und/oder der Adapter aus Metallguss.

Nach einer vorteilhaften Ausgestaltung des erfindungsgemäßen Befestigungssystem zur Befestigung eines Profilgehäuses in einem Schranksystem, wobei das Befestigungssystem insbesondere aus einer mit dem Profilgehäuse verbindbaren Endkappe und mindestens einem an der Endkappe anordbaren und mit dem Schranksystem verbindbaren Befestigungsmittel besteht und die Endkappe eine Führung aufweist, in die das Befestigungsmittel oder ein Adapter, an dem das Befestigungsmittel angeordnet ist, zumindest teilweise einschiebbar sind, wodurch das Profilgehäuse werkzeuglos mit dem Befestigungsmittel verbunden wird, ist die Endkappe eine Endkappe gemäß einem der Ansprüche 1 bis 11.

Nach einer vorteilhaften Ausgestaltung des erfindungsgemäßen Verfahrens zur Befestigung eines Profilgehäuses in einem Schranksystem, wobei ein dabei verwendetes Befestigungssystem insbesondere aus einer mit dem Profilgehäuse verbindbaren Endkappe und mindestens einem an der Endkappe anordbaren und mit dem Schranksystem verbindbaren Befestigungsmittel besteht und die Endkappe eine Führung aufweist, in die das Befestigungsmittel oder ein Adapter, an dem das Befestigungsmittel angeordnet ist, zumindest teilweise eingeschoben werden, wodurch das Profilgehäuse werkzeuglos mit dem Befestigungsmittel verbunden wird, erfolgt die Verbindung der Endkappe mit dem Befestigungsmittel oder mit dem Adapter durch Verrastung.

Nach einer zusätzlich vorteilhaften Ausgestaltung des erfindungsgemäßen Verfahrens ist die Endkappe eine Endkappe gemäß einem der Ansprüche 1 bis 11 und/oder ist das Befestigungssystem ein Befestigungssystem nach Anspruch 12 oder Anspruch 13.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung dargestellt und werden im Folgenden näher erläutert. Es zeigen:
- Fig. 1: eine perspektivische Darstellung einer erfindungsgemä-βen Endkappe mit einem Befestigungsmittel in Form eines Montagewinkels,
- Fig. 2: eine Aufsicht auf eine erfindungsgemäße Endkappe gemäß Fig. 1,
- Fig. 3: eine perspektivische Darstellung einer erfindungsgemäßen Endkappe mit einem seitlich eingeschobenen Befestigungsmittel in Form eines Montagewinkels,
- Fig. 4: eine Seitenansicht einer erfindungsgemäßen Endkappe eines Steckdosenprofils gemäß Fig. 3,
- Fig. 5: eine perspektivische Darstellung einer erfindungsgemä-βen Endkappe, in die zwei Befestigungsmittel in Form von Montagewinkeln eingeschoben sind,
- Fig. 6: eine Seitenansicht einer erfindungsgemäßen Endkappe gemäß Fig. 5,
- Fig. 7: eine perspektivische Darstellung einer anderen Ausführungsform einer erfindungsgemäßen Endkappe,
- Fig. 8: eine perspektivische Darstellung eines Adapters in Form eines Winkeladapters,
- Fig. 9: eine perspektivische Darstellung einer anderen Ausführungsform eines Befestigungsmittels in Form eines Befestigungswinkels,
- Fig. 10: eine perspektivische Darstellung einer nochmals anderen Ausführungsform eines Befestigungsmittels in Form eines Befestigungswinkels,
- Fig. 11: eine andere perspektivische Darstellung des Befestigungsmittels gemäß Fig. 10,
- Fig. 12: eine Aufsicht des Befestigungsmittels gemäß Fig. 10,
- Fig. 13: eine Seitenansicht des Befestigungsmittels gemäß Fig. 10,
- Fig. 14: eine perspektivische Darstellung eines Spreizniets,
- Fig. 15: eine perspektivische Darstellung eines erfindungsgemä-βen Befestigungssystems bestehend aus einer erfindungsgemäßen Endkappe gemäß Fig. 7, einem Adapter gemäß Fig. 8 und einem Befestigungsmittel gemäß Fig. 9,
- Fig. 16: eine andere perspektivische Darstellung des erfindungsgemäßen Befestigungssystems gemäß Fig. 15,
- Fig. 17: eine perspektivische Darstellung einer anderen Ausführungsform einer erfindungsgemäßen Endkappe,
- Fig. 18: eine perspektivische Darstellung eines erfindungsgemä-βen Befestigungssystems bestehend aus einer erfindungsgemäßen Endkappe gemäß Fig. 17, einem Adapter gemäß Fig. 8 und einem Befestigungsmittel gemäß Fig. 9 und
- Fig. 19: eine andere perspektivische Darstellung des erfindungsgemäßen Befestigungssystems gemäß Fig. 18.

### Beschreibung des Ausführungsbeispiels

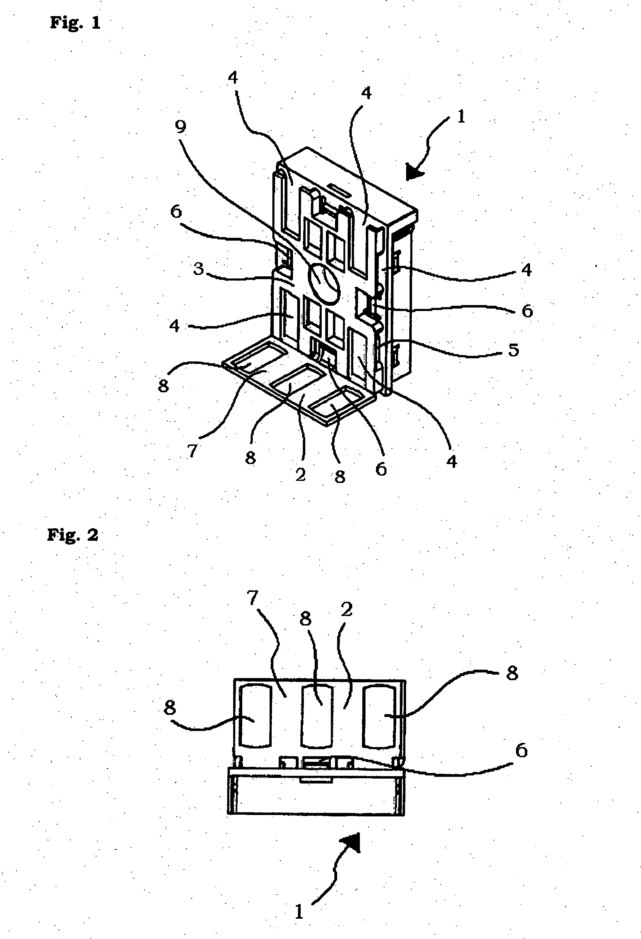

Fig. 1 zeigt eine perspektivische Darstellung einer erfindungsgemä-βen Endkappe 1 mit einem Befestigungsmittel 2 in Form eines Montagewinkels. Die erfindungsgemäße Endkappe 1 kann an einer Stirnseite eines nicht dargestellten Profilgehäuse (z.B. Steckdosenprofil) eingeclipst (verrastet) werden. Auf einer dem Profilgehäuse abgewandten Seite 3 der erfindungsgemäßen Endkappe 1 sind Führungen 4 angeordnet, in die eine Zunge 5 des Befestigungsmittels 2 eingeführt werden können, wodurch das Befestigungsmittel 2 mit der erfindungsgemäßen Endkappe 1 verbunden wird. Mittels Rasthaken 6, die im eingeschobenen Zustand des Befestigungsmittels 2 in eine am Befestigungsmittel angeordnete Öffnung eingreifen, findet eine Fixierung des Befestigungsmittels 2, das in Fig. 1 von unten in die Führung 4 der erfindungsgemäßen Endkappe 1 eingeschoben wurde, an der erfindungsgemäßen Endkappe 1 statt. Die Entnahme des Befestigungsmittels 2 erfolgt durch Niederdrücken des Rasthakens 6, wodurch das Befestigungsmittel 2 aus der erfindungsgemä-ßen Endkappe 1 herausgezogen werden kann. Die erfindungsgemä-ße Endkappe 1 weist somit die Eigenschaft auf, dass ein Befestigungsmittel 2 (z.B. Montagewinkel, Anschraubwinkel), wie sie z.B. in IT Racks Verwendung finden werkzeuglos und schraubenlos an den vier Außenseiten durch Aufschieben sicher verrastet werden kann. Dadurch ist das erfindungsgemäße Befestigungssystem sehr platzsparend an den Seitenholmen eines Schranksystems zu befestigen, wobei eine horizontale und eine vertikale Anbringung im 90° Raster möglich ist.

Der außerhalb der Führung 4 angeordneter Teil 7 eines in die Führung 4 eingeschobenen Befestigungsmittels 2 weist drei Öffnungen in Form von Langlöchern 8 auf, durch die das Befestigungsmittel 2 an einem Schranksystem geclipst, verschraubt oder anderweitig fixiert werden kann.

Im Falle, dass durch die erfindungsgemäße Endkappe 1 die Kabeleinspeisung in das Profilgehäuse erfolgen soll, ist die die erfindungsgemäße Endkappe 1 mit einem Loch 9 ausgestattet.

Fig. 2 zeigt eine Aufsicht auf eine erfindungsgemäße Endkappe 1 gemäß Fig. 1

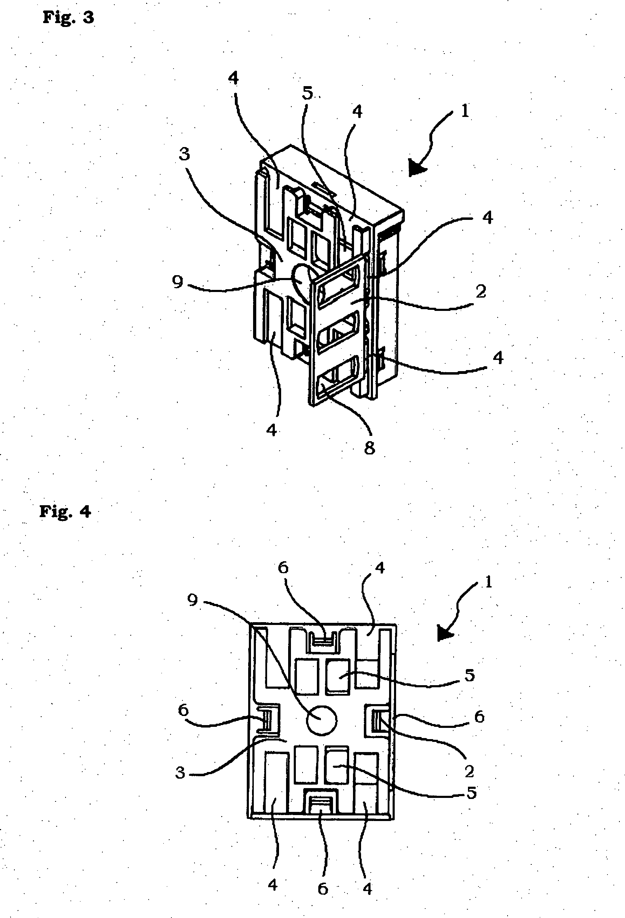

Fig. 3 zeigt eine perspektivische Darstellung einer erfindungsgemä-βen Endkappe 1 mit einem seitlich eingeschobenen Befestigungsmittel 2 in Form eines Montagewinkels.

Fig. 4 zeigt eine Seitenansicht einer erfindungsgemäßen Endkappe 1 eines Steckdosenprofils (z.B. PDU-Profil, Power/Daten-Versorgungsleiste) gemäß Fig. 3.

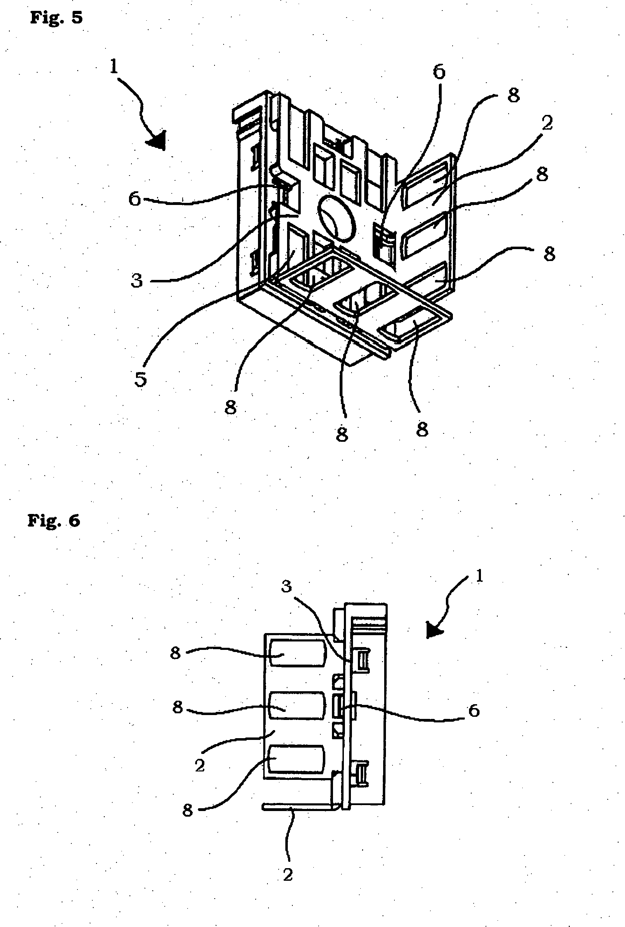

Fig. 5 zeigt eine perspektivische Darstellung einer erfindungsgemä-βen Endkappe 1, in die zwei Befestigungsmittel 2 in Form von Montagewinkeln eingeschoben sind.

Fig. 6 zeigt eine Seitenansicht einer erfindungsgemäßen Endkappe 1 gemäß Fig. 5.

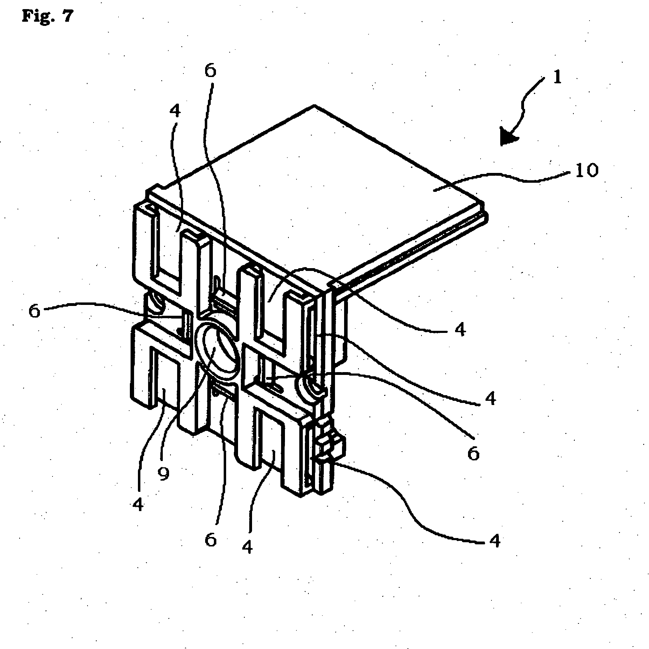

Fig. 7 zeigt eine perspektivische Darstellung einer anderen Ausführungsform einer erfindungsgemäßen Endkappe 1. Diese kann bevorzugt bei U-förmigen Profilgehäusen eingesetzt werden, so dass deren Stirnseite durch das mit dem Loch 9 versehenen Teil der erfindungsgemäßen Endkappe 1 und der offene Teil des Profilgehäuses durch eine Abdeckung 10 verschlossen wird.

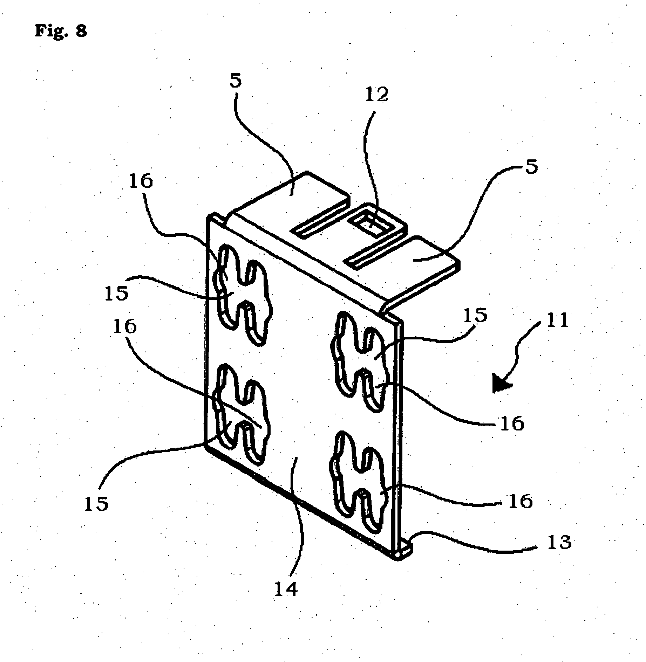

Fig. 8 zeigt eine perspektivische Darstellung eines Adapters 11 in Form eines Winkeladapters. Der Adapter 11 weist Zungen 5 auf, die in die Führungen 4 der erfindungsgemäßen Endkappe 1 einführbar sind. Durch eine Öffnung 12, die mit einem Rasthaken 6 der erfindungsgemäßen Endkappe 1 zusammenwirkt, wird der Adapter 11 im eingeschobenen Zustand an der erfindungsgemäßen Endkappe 1 fixiert. Im eingeschobenen Zustand bewirkt ein Kragen 13, dass ein außerhalb der Führung angeordneter Teil 14 eines in die Führung 4 eingeschobenen Adapters 11 beabstandet von einer Wandung des Profilgehäuses angeordnet ist. Dadurch wird es möglich, dass z.B. Aufnahmezapfen von Befestigungsmitteln durch Langlöcher 15, die mit Einführungsbohrungen 16 versehen sind, einführbar sind.

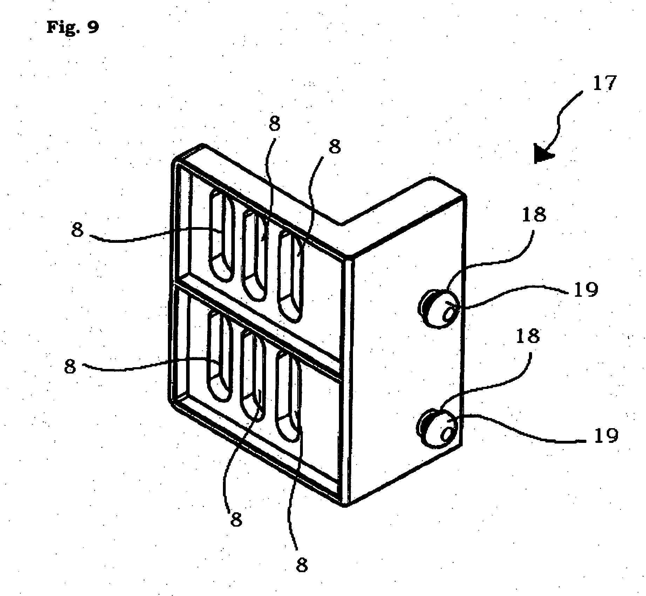

Fig. 9 zeigt eine perspektivische Darstellung einer anderen Ausführungsform eines Befestigungsmittels 17 in Form eines Befestigungswinkels. Das Befestigungsmittel 17 weist Aufnahmezapfen 18 auf, deren pilzförmige Köpfe 19 durch die in Fig. 8 dargestellten Einführungsbohrungen 16 passen, so dass anschließend eine Fixierung in den Langlöchern 15 ermöglicht wird. Des Weiteren weist das Befestigungsmittel 17 Langlöcher 8 auf, durch die das Befestigungsmittel 17 an einem Schranksystem geclipst, verschraubt oder anderweitig fixiert werden kann.

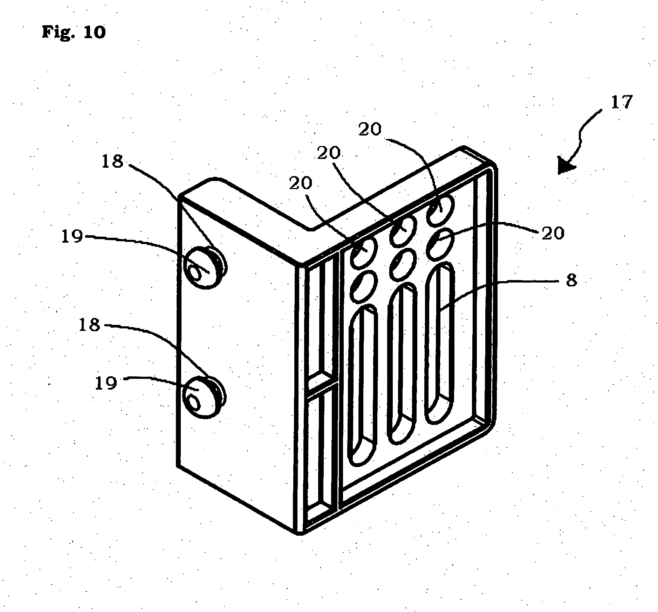

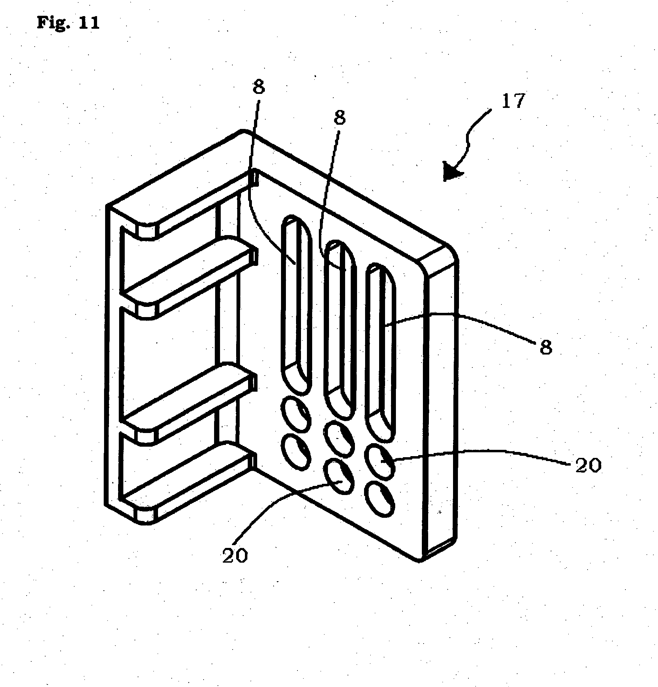

Die Fig. 10 und die Fig. 11 zeigen perspektivische Darstellungen einer nochmals anderen Ausführungsform eines Befestigungsmittels 17 in Form eines Befestigungswinkels. Dadurch wird deutlich, dass die Langlöcher 8 zumindest teilweise auch durch z.B. Rundlöcher 20 ersetzt werden können, so dass dadurch eine positionsgenauere Fixierung des Befestigungsmittels 17 am Schranksystem ermöglicht wird.

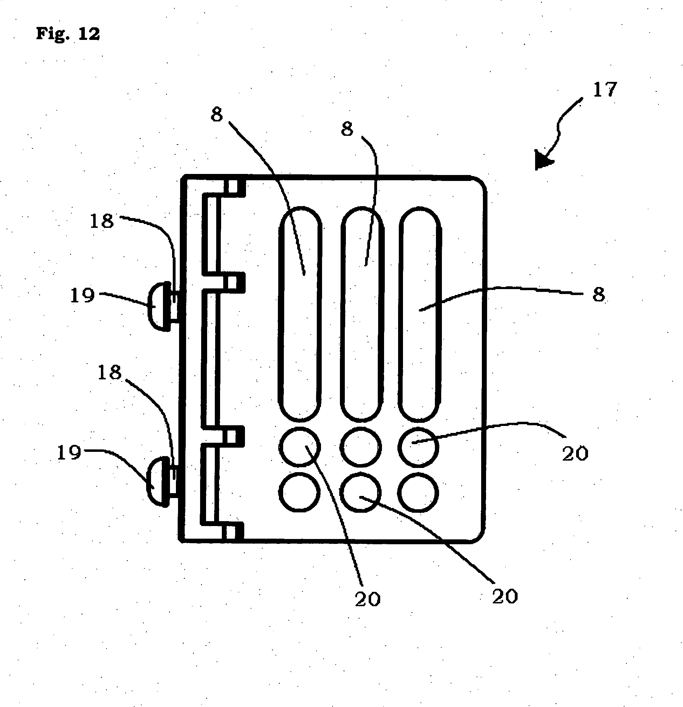

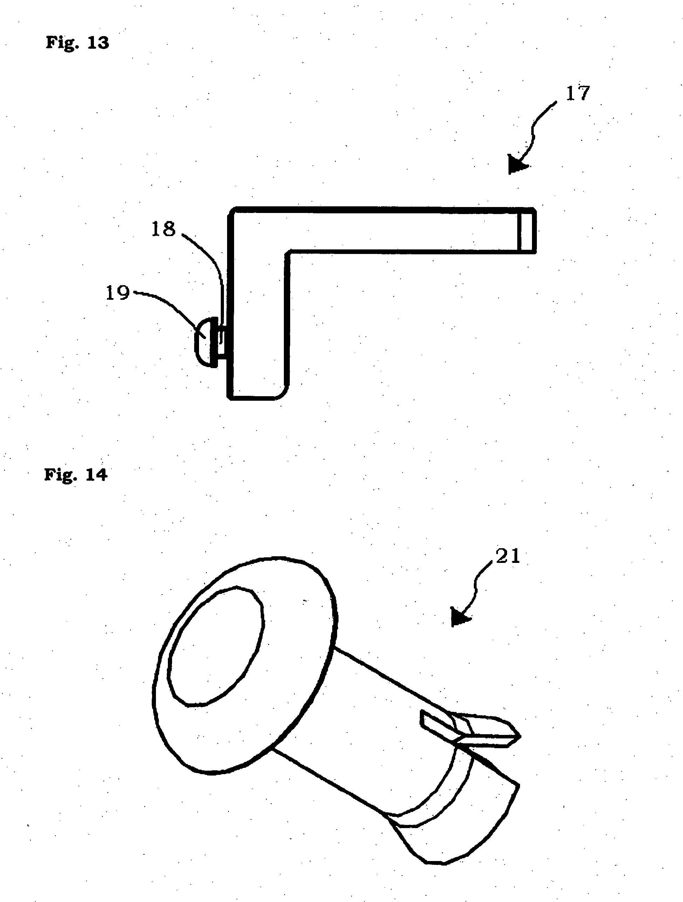

Die Fig. 12 und die Fig. 13 zeigen eine Aufsicht und eine Seitenansicht des Befestigungsmittels gemäß Fig. 10.

Fig. 14 zeigt eine perspektivische Darstellung eines Spreizniets 21, der zur Fixierung der in den vorhergehenden Figuren gezeigten Befestigungsmittel 2 und 17 an einem Schranksystem verwendet werden kann. Bevorzugt kann der Spreizniet 21 als Kunststoffspreizniet ausgestaltet sein.

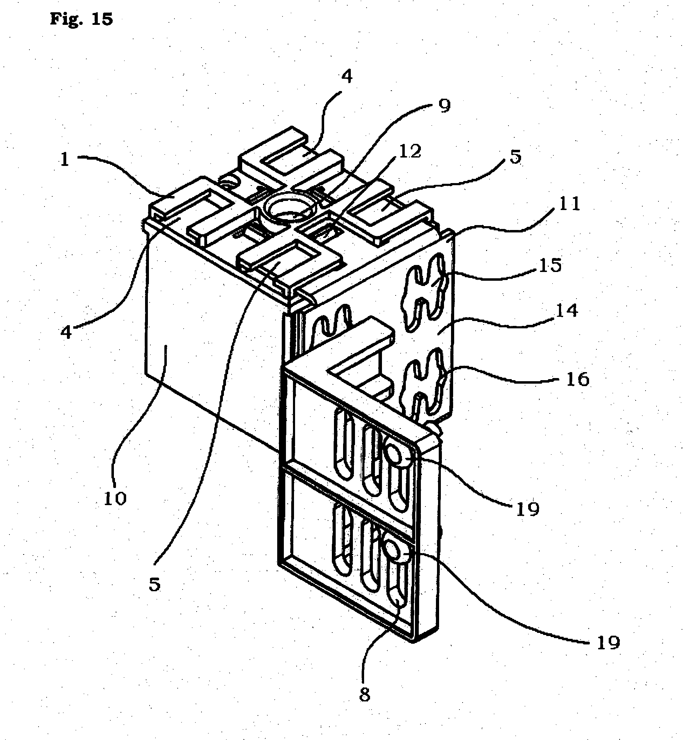

Fig. 15 zeigt eine perspektivische Darstellung eines erfindungsgemäßen Befestigungssystems bestehend aus einer erfindungsgemä-βen Endkappe 1 gemäß Fig. 7, einem Adapter 11 gemäß Fig. 8 und einem Befestigungsmittel 17 gemäß Fig. 9.

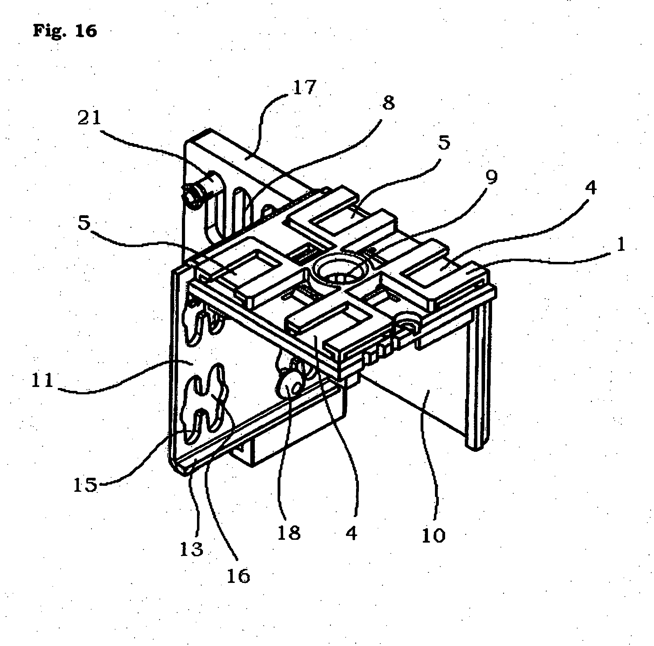

Fig. 16 zeigt eine andere perspektivische Darstellung des erfindungsgemäßen Befestigungssystems gemäß Fig. 15. Dabei wird deutlich, dass durch den Kragen 13 des Adapters 11 der notwendige Abstand geschaffen wird, damit der Kopf 18 zur Fixierung des Befestigungsmittels 17 durch die Einführungsbohrung 16 gesteckt werden kann.

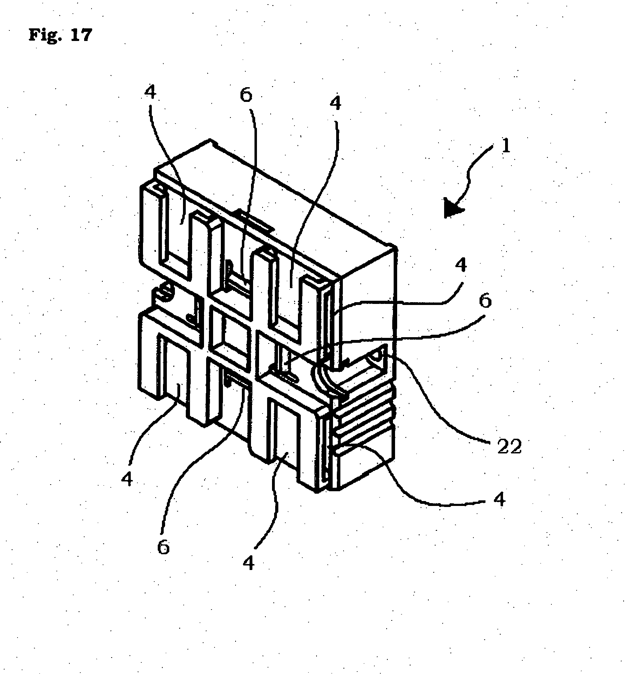

Fig. 17 zeigt eine perspektivische Darstellung einer anderen Ausführungsform einer erfindungsgemäßen Endkappe 1. Diese kann über Öffnungen 22 an der Stirnseite eines nicht dargestellten Profilgehäuses verschraubt werden.

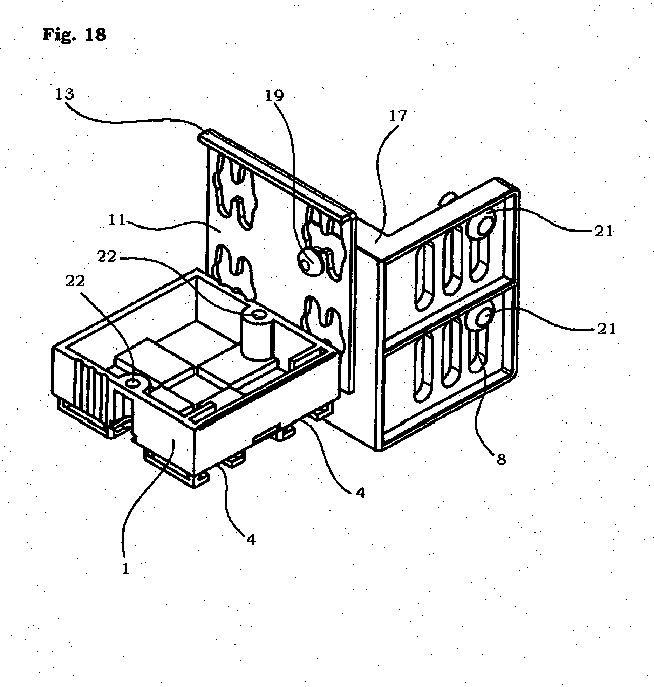

Fig. 18 zeigt eine perspektivische Darstellung eines erfindungsgemäßen Befestigungssystems bestehend aus einer erfindungsgemä-βen Endkappe 1 gemäß Fig. 17, einem Adapter 11 gemäß Fig. 8 und einem Befestigungsmittel 17 gemäß Fig. 9.

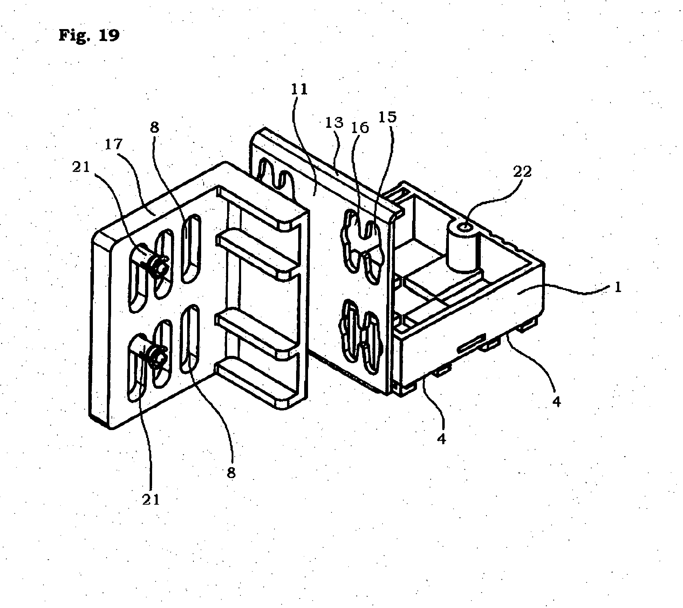

Fig. 19 zeigt eine andere perspektivische Darstellung des erfindungsgemäßen Befestigungssystems gemäß Fig. 18.

Alle hier dargestellten Merkmale können sowohl einzeln als auch in beliebiger Kombination miteinander erfindungswesentlich sein.

### Bezugszahlenliste

- 1: Endkappe
- 2: Befestigungsmittel
- 3: Seite
- 4: Führung
- 5: Zunge
- 6: Rasthaken
- 7: Teil
- 8: Langloch
- 9: Loch
- 10: Abdeckung
- 11: Adapter
- 12: Öffnung
- 13: Kragen
- 14: Teil
- 15: Langloch
- 16: Einführungsbohrung
- 17: Befestigungsmittel
- 18: Aufnahmezapfen
- 19: Kopf
- 20: Rundloch
- 21: Spreizniet
- 22: Öffnung

## Patentansprüche

1. Endkappe (1) für ein in ein Schranksystem befestigbares Profilgehäuse, wobei die Befestigung des Profilgehäuses, an dem die Endkappe (1) angeordnet ist, mittels eines mit der Endkappe (1) zusammenwirkenden Befestigungsmittels (2, 17) bewirkt wird,
**dadurch gekennzeichnet,**
**dass** die Endkappe (1) an ihrer dem Profilgehäuse abgewandten Seite mindestens eine Führung (4) aufweist, durch die mindestens ein Befestigungsmittel (2, 17) an der Endkappe (1) anordbar ist.

2. Endkappe (1), nach Anspruch 1,
**dadurch gekennzeichnet,**
**dass** die Anordnung des Befestigungsmittels (2, 17) an der Endkappe (1) direkt durch Einschieben des Befestigungsmittels (2) in die Führung (4) der Endkappe (1) oder indirekt mittels mindestens einen in die Führung (4) der Endkappe (1) einschiebbaren Adapters (11) erfolgt.

3. Endkappe (1), nach Anspruch 2,
**dadurch gekennzeichnet,**
**dass** die Endkappe (1) und/oder das Befestigungsmittel (2) mindestens einen Rasthaken (6) aufweist, wodurch ein in die Führung (4) eingeschobenes Befestigungsmittel (2) mit der Endkappe (1) verrastet oder die Endkappe (1) und/oder der Adapter (11) mindestens einen Rasthaken (6) aufweist, wodurch ein in die Führung (4) eingeschobener Adapter (11) mit der Endkappe (1) verrastet.

4. Endkappe (1), nach Anspruch 2 oder Anspruch 3,
**dadurch gekennzeichnet,**
**dass** das Befestigungsmittel (2, 17) und/oder der Adapter (11) winkelförmig sind.

5. Endkappe (1), nach einem der Ansprüche 2 bis 4,
**dadurch gekennzeichnet,**
**dass** ein außerhalb der Führung (4) angeordneter Teil (7) eines in die Führung (4) eingeschobenen Befestigungsmittels (2) oder ein außerhalb der Führung (4) angeordneter Teil (14) eines in die Führung (4) eingeschobenen Adapters (11) mindestens eine Öffnung aufweist.

6. Endkappe (1), nach Anspruch 5,
**dadurch gekennzeichnet,**
**dass** die Öffnung ein Rechteckloch, Rundloch oder Langloch ist.

7. Endkappe (1), nach einem der Ansprüche 2 bis 6,
**dadurch gekennzeichnet,**
**dass** eine außerhalb der Führung (4) angeordnete Fläche eines in die Führung (4) eingeschobenen Befestigungsmittels (2) oder eine außerhalb der Führung (4) angeordnete Fläche eines in die Führung (4) eingeschobenen Adapters (11) parallel zu einer Wandung des Profilgehäuses angeordnet sind.

8. Endkappe (1), nach Anspruch 7,
**dadurch gekennzeichnet,**
**dass** die parallel zur Wandung des Profilgehäuses angeordnete Fläche beabstandet zu der Wandung des Profilgehäuses angeordnet ist.

9. Endkappe (1), nach einem der vorhergehenden Ansprüche,
**dadurch gekennzeichnet,**
**dass** die Endkappe (1) ein Loch (9) zur Kabeleinspeisung oder eine Aussparung für einen Stecker aufweist.

10. Endkappe (1), nach einem der vorhergehenden Ansprüche,
**dadurch gekennzeichnet,**
**dass** die Endkappe (1) durch eine Verrastung mit dem Profilgehäuse verbunden ist.

11. Endkappe (1), nach einem der vorhergehenden Ansprüche,
**dadurch gekennzeichnet,**
**dass** die Endkappe (1), das Befestigungsmittel (2, 17) und/oder der Adapter (11) aus Metallguss sind.

12. Befestigungssystem zur Befestigung eines Profilgehäuses in einem Schranksystem, wobei das Befestigungssystem insbesondere aus einer mit dem Profilgehäuse verbindbaren Endkappe (1) und mindestens einem an der Endkappe (1) anordbaren und mit dem Schranksystem verbindbaren Befestigungsmittel (2, 17) besteht,
**dadurch gekennzeichnet,**
**dass** die Endkappe (1) an ihrer dem Profilgehäuse abgewandten Seite eine Führung (4) aufweist, in die das Befestigungsmittel (2) oder ein Adapter (11), an dem das Befestigungsmittel (17) angeordnet ist, zumindest teilweise einschiebbar sind, wodurch das Profilgehäuse werkzeuglos mit dem Befestigungsmittel (2, 17) verbunden wird.

13. Befestigungssystem, nach Anspruch 12,
**dadurch gekennzeichnet,**
**dass** die Endkappe (1) eine Endkappe (1) gemäß einem der Ansprüche 1 bis 11 ist.

14. Verfahren zur Befestigung eines Profilgehäuses in einem Schranksystem, wobei ein dabei verwendetes Befestigungssystem insbesondere aus einer mit dem Profilgehäuse verbindbaren Endkappe (1) und mindestens einem an der Endkappe (1) anordbaren und mit dem Schranksystem verbindbaren Befestigungsmittel (2, 17) besteht,
**dadurch gekennzeichnet,**
**dass** die Endkappe (1) an ihrer dem Profilgehäuse abgewandten Seite eine Führung (4) aufweist, in die das Befestigungsmittel (2) oder ein Adapter (11), an dem das Befestigungsmittel (17) angeordnet ist, zumindest teilweise eingeschoben werden, wodurch das Profilgehäuse werkzeuglos mit dem Befestigungsmittel (2, 17) verbunden wird.

15. Verfahren, nach Anspruch 14,
**dadurch gekennzeichnet,**
**dass** die Verbindung der Endkappe (1) mit dem Befestigungsmittel (2) oder mit dem Adapter (11) durch Verrastung erfolgt.

16. Verfahren, nach Anspruch 14 oder Anspruch 15,
**dadurch gekennzeichnet,**
**dass** die Endkappe (1) eine Endkappe (1) gemäß einem der Ansprüche 1 bis 11 ist und/oder das Befestigungssystem ein Befestigungssystem nach Anspruch 12 oder Anspruch 13 ist.

## Claims

1. An end cap (1) for a profile housing, which can be fixed in a cabinet system, wherein the fixing of the profile housing, on which the end cap (1) is arranged, is effected by means of a fixing means (2, 17), which cooperates with the end cap (1),
**characterized in**
**that**, on its side, which faces away from the profile housing, the end cap (1) encompasses at least one guide (4), through which at least one fixing means (2, 17) can be arranged on the end cap (1).

2. The end cap (1) according to claim 1,
**characterized in**
**that** the arrangement of the fixing means (2, 17) on the end cap (1) takes place directly by inserting the fixing means (2) into the guide (4) of the end cap (1) or indirectly by means of at least one adapter (11), which can be inserted into the guide (4) of the end cap (1).

3. The end cap (1) according to claim 2,
**characterized in**
**that** the end cap (1) and/or the fixing means (2) encompasses at least one engagement hook (6), whereby a fixing means (2), which is inserted into the guide (4), interlocks with the end cap (1) or the end cap (1) and/or the adapter (11) encompasses at least one engagement hook (6), whereby an adapter (11), which is inserted into the guide (4), interlocks with the end cap (1).

4. The end cap (1) according to claim 2 or claim 3,
**characterized in**
**that** the fixing means (2, 17) and/or the adapter (11) are angled.

5. The end cap (1) according to one of claims 2 to 4,
**characterized in**
**that** a part (7) of a fixing means (2), which is inserted into the guide (4), arranged outside the guide (4) or a part (14) of an adapter (11), which is inserted into the guide (4), arranged outside the guide (4), encompasses at least one opening.

6. The end cap (1) according to claim 5,
**characterized in**
**that** the opening is a rectangular hole, round hole or elongated hole.

7. The end cap (1) according to one of claims 2 to 6,
**characterized in**
**that** a surface of a fixing means (2), which is inserted into the guide (4), located outside the guide (4) or a surface of an adapter (11), which is inserted into the guide (4), located outside the guide (4) are arranged parallel to a wall of the profile housing.

8. The end cap (1) according to claim 7,
**characterized in**
**that** the surface, which is arranged parallel to the wall of the profile housing, is arranged at a distance from the wall of the profile housing.

9. The end cap (1) according to one of the preceding claims,
**characterized in**
**that** the end cap (1) encompasses a hole (9) for feeding cables or a recess for a plug.

10. The end cap (1) according to one of the preceding claims,
**characterized in**
**that** the end cap (1) is connected to the profile housing by a catch mechanism.

11. The end cap (1) according to one of the preceding claims, **characterized in**
**that** the end cap (1), the fixing means (2, 17) and/or the adapter (11) are made of cast metal.

12. A fixing system for fixing a profile housing in a cabinet system, wherein the fixing system consists in particular of an end cap (1), which can be connected to the profile housing, and of at least one fixing means (2, 17), which can be arranged on the end cap (1) and which can be connected to the cabinet system,
**characterized in**
**that**, on its side, which faces away from the profile housing, the end cap (1) encompasses a guide (4), into which the fixing means (2) or an adapter (11), on which the fixing means (17) is arranged, can be inserted at least partially, whereby the profile housing is connected to the fixing means (2, 17) in a tool-free manner.

13. The fixing system according to claim 12,
**characterized in**
**that** the end cap (1) is an end cap (1) according to one of claims 1 to 11.

14. A method for fixing a profile housing in a cabinet system, wherein a fixing system used thereby consists in particular of an end cap (1), which can be connected to the profile housing, and of at least one fixing means (2, 17), which can be arranged on the end cap (1) and which can be connected to the cabinet system,
**characterized in**
**that**, on its side, which faces away from the profile housing, the end cap (1) encompasses a guide (4), into which the fixing means (2) or an adapter (11), on which the fixing means (17) is arranged, can be inserted at least partially, whereby the profile housing is connected to the fixing means (2, 17) in a tool-free manner.

15. The method according to claim 14,
**characterized in**
**that** the connection of the end cap (1) to the fixing means (2) or to the adapter (11) takes place by means of interlocking.

16. The method according to claim 14 or claim 15,
**characterized in**
**that** the end cap (1) is an end cap (1) according to one of claims 1 to 11 and/or the fixing system is a fixing system according to claim 12 or claim 13.

## Revendications

1. Capuchon d'extrémité (1) pour un boîtier profilé susceptible d'être fixé dans un système d'armoire, la fixation du boîtier profilé sur lequel est placé le capuchon d'extrémité (1) étant obtenue à l'aide d'un moyen de fixation (2, 17) coopérant avec le capuchon d'extrémité (1),
**caractérisé en ce que**
sur son côté opposé au boîtier profilé, le capuchon d'extrémité (1) comporte au moins un guidage (4), par lequel au moins un moyen de fixation (2, 17) peut être placé sur le capuchon d'extrémité (1).

2. Capuchon d'extrémité ((1) selon la revendication 1,
**caractérisé en ce que**
le placement du moyen de fixation (2, 17) sur le capuchon d'extrémité (1) s'effectue directement par insertion du moyen de fixation (2) dans le guidage (4) du capuchon d'extrémité (1) ou indirectement, à l'aide d'au moins un adaptateur (11) insérable dans le guidage (4) du capuchon d'extrémité (1).

3. Capuchon d'extrémité (1) selon la revendication 2,
**caractérisé en ce que**
le capuchon d'extrémité (1) et/ou les moyens de fixation (2) comporte(nt) au moins un crochet d'enclenchement (6) par lequel un moyen de fixation (2) inséré dans le guidage (4) s'enclenche avec le capuchon d'extrémité (1) ou le capuchon d'extrémité (1) et/ou l'adaptateur (11) comporte(nt) au moins un crochet d'enclenchement (6), par lequel un adaptateur (11) inséré dans le guidage (4) s'enclenche avec le capuchon d'extrémité (1).

4. Capuchon d'extrémité (1) selon la revendication 2 ou la revendication 3,
**caractérisé en ce que**
les moyens de fixation (2, 17) et/ou l'adaptateur (11) sont de forme angulaire.

5. Capuchon d'extrémité (1) selon l'une quelconque des revendications 2 à 4,
**caractérisé en ce**
**qu'**une partie (7) placée à l'extérieur du guidage (4) d'un moyen de fixation (2) inséré dans le guidage (4) ou une partie (14) placée à l'extérieur du guidage (4) d'un adaptateur (11) inséré dans le guidage (4) comporte au moins un orifice.

6. Capuchon d'extrémité (1) selon la revendication 5,
**caractérisé en ce que**
l'orifice est un trou rectangulaire, un trou circulaire ou un trou oblong.

7. Capuchon d'extrémité (1) selon l'une quelconque des revendications 2 à 6,
**caractérisé en ce**
**qu'**une surface placée à l'extérieur du guidage (4) d'un moyen de fixation (2) inséré dans le guidage (4) ou une surface placée à l'extérieur du guidage (4) d'un adaptateur (11) inséré dans le guidage (4) est placée à la parallèle d'une paroi du boîtier profilé.

8. Capuchon d'extrémité (1) selon la revendication 7,
**caractérisé en ce que**
la surface placée à la parallèle de la paroi du boîtier profilé est placée à distance de la paroi du boîtier profilé.

9. Capuchon d'extrémité (1) selon l'une quelconque des revendications précédentes,
**caractérisé en ce que**
le capuchon d'extrémité (1) comporte un trou (9) pour l'alimentation par câble ou un évidement pour un connecteur.

10. Capuchon d'extrémité (1) selon l'une quelconque des revendications précédentes,
**caractérisé en ce que**
le capuchon d'extrémité (1) est relié avec le boîtier profilé par un enclenchement.

11. Capuchon d'extrémité (1) selon l'une quelconque des revendications précédentes,
**caractérisé en ce que**
le capuchon d'extrémité (1), le moyen de fixation (2, 17) et/ou l'adaptateur (11) sont en fonte métallique.

12. Système de fixation destiné à fixer un boîtier profilé dans un système d'armoire, le système de fixation étant constitué notamment d'un capuchon d'extrémité (1) susceptible d'être relié avec le boîtier profilé et d'au moins un moyen de fixation (2, 17) susceptible d'être placé sur le capuchon d'extrémité (1) et d'être relié avec le système d'armoire,
**caractérisé en ce que**
sur son côté opposé au boîtier profilé, le capuchon d'extrémité (1) comporte un guidage (4) dans lequel le moyen de fixation (2) ou un adaptateur (11) sur lequel est placé le moyen de fixation (17) est insérable au moins en partie, suite à quoi, on relie sans outil le boîtier profilé avec le moyen de fixation (2, 17).

13. Système de fixation selon la revendication 12,
**caractérisé en ce que**
le capuchon d'extrémité (1) est un capuchon d'extrémité (1) selon l'une quelconque des revendications 1 à 11.

14. Procédé destiné à fixer un boîtier d'extrémité dans un système d'armoire, un système de fixation utilisé à cet effet étant constitué notamment d'un capuchon d'extrémité (1) susceptible d'être relié avec le boîtier profilé et d'au moins un moyen de fixation (2, 17) placé sur le capuchon d'extrémité (1) et susceptible d'être relié avec le système d'armoire,
**caractérisé en ce que**
sur son côté opposé au boîtier profilé, le capuchon d'extrémité (1) comporte un guidage (4) dans lequel le moyen de fixation (2) ou un adaptateur (11) sur lequel est placé le moyen de fixation (17) est insérable au moins en partie, suite à quoi, on relie sans outil le boîtier profilé avec le moyen de fixation (2, 17).

15. Procédé selon la revendication 14,
**caractérisé en ce que**
la liaison du capuchon d'extrémité (1) avec le moyen de fixation (2) ou avec l'adaptateur (11) s'effectue par enclenchement.

16. Procédé selon la revendication 14 ou la revendication 15,
**caractérisé en ce que**
le capuchon d'extrémité (1) est un capuchon d'extrémité (1) selon l'une quelconque des revendications 1 à 11 et/ou **en ce que** le système de fixation est un système de fixation selon la revendication 12 ou la revendication 13.
